# EUROPÄISCHE PATENTSCHRIFT

(11) **EP 3 799 584 B1**
(45) Veröffentlichungstag und Bekanntmachung des Hinweises auf die Patenterteilung: **25.05.2022**
(21) Anmeldenummer: 19752944.9
(22) Anmeldetag: 25.07.2019
(51) Int. Cl.: B29B 15/12, B29C 48/51

(54) **VORRICHTUNG UND VERFAHREN ZUR IN-SITU-SCHNECKENIMPRÄGNIERUNG UND EXTRUSION VON ENDLOSFASERN**
DEVICE AND METHOD FOR IN-SITU SCREW IMPREGNATION AND EXTRUSION OF CONTINUOUS FIBERS
DISPOSITIF ET PROCÉDÉ POUR L'IMPRÉGNATION IN SITU DANS LA VIS ET L'EXTRUSION DE FIBRES CONTINUES

(30) Priorität: 02.08.2018 DE 102018212970
(43) Veröffentlichungstag der Anmeldung: 07.04.2021
(73) Patentinhaber: Siemens Aktiengesellschaft, 80333 München (DE)
(72) Erfinder: KÜHN, Cornelius, 91052 Erlangen (DE); KALLENBERG, Sebastian, 91301 Forchheim (DE); OCHSENKÜHN, Manfred, 92348 Berg (DE); ZEININGER, Heinrich, 90587 Obermichelbach (DE)
(86) Internationale Anmeldenummer: PCT/EP2019/070056
(87) Internationale Veröffentlichungsnummer: WO 2020/025446

(56) Entgegenhaltungen:
- WO-A1-2017/096107
- DE-A1- 3 121 006
- JP-A- 2012 213 918
- JP-U- S59 169 924
- US-B1- 6 808 380

## Beschreibung

Die Erfindung betrifft eine Vorrichtung und ein Verfahren zum Versehen zumindest eines wenigstens eine Filament aufweisenden Faserelements mit einem Matrixmaterial.

Die US 2005/0221085 A1 offenbart ein Verfahren zum Herstellen von kunststoffbeschichteten Fasern.

Der DE 10 2012 220 520 A1 ist ein Verfahren zum Imprägnieren eines Rovings als bekannt zu entnehmen. Bei dem Verfahren wird das Roving mit einer ersten Temperatur bereitgestellt. Bei einem zweiten Schritt des Verfahrens wird das auch als Faserbündel bezeichnete Roving auf eine definierte zweite Temperatur erwärmt. Bei einem dritten Schritt des Verfahrens wird ein Matrix-Gemisch mit einer dritten Temperatur zugeführt. Außerdem wird das erwärmte Roving mit dem zugeführten Matrix-Gemisch imprägniert.

Außerdem ist aus der DE 10 2001 005 462 B3 ein Verfahren zur Herstellung eines Faserverbundwerkstoffes in Form eines mit einem polymerimprägnierten Faserbandes bekannt.

Die Dokumente JP S59 169924, US 6 808 380 sowie JP 2012 213 918 offenbaren die übliche Lösung, in welcher das Filament einen inneren Kanal der Förderschnecke durchläuft und am Ende der Förderschnecke mit einem am Rand der Förderschnecke herumlaufenden Matrix imprägniert wird.

Aufgabe der vorliegenden Erfindung ist es, eine Vorrichtung und ein Verfahren zu schaffen, sodass zumindest ein Faserelement auf besonders einfache und kostengünstige Weise mit einem Matrixmaterial versehen, insbesondere imprägniert und gegebenenfalls letztendlich direkt zu einem Bauteil extrudiert werden kann, wodurch Zwischenschritte in Form von Halbzeugen obsolet werden.

Diese Aufgabe wird erfindungsgemäß durch die Gegenstände der unabhängigen Patentansprüche gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Vorrichtung zum Versehen zumindest eines beispielsweise als Verstärkungsfaserelement ausgebildeten Faserelements mit einem einfach auch als Matrix bezeichneten Matrixmaterial, wobei das Faserelement wenigstens ein Filament aufweist. Das Filament kann als eine einzelne Faser, insbesondere Draht, beliebiger Länge definiert sein. Das Filament an sich kann biegeschlaff beziehungsweise formlabil oder aber biegesteif beziehungsweise eigensteif, das heißt formstabil sein. Das Filament kann ein Draht aus einem Kunststoff, das heißt ein Kunststoffdraht sein. Im Rahmen der Erfindung ist - falls nichts anderes definiert ist - unter dem Begriff "Filament" eine einzelne Faser, insbesondere beliebiger Länge, zu verstehen, wobei das Filament aus einem beliebigen beziehungsweise aus jedwedem Werkstoff gebildet sein kann.

Bei dem Faserelement kann es sich um eine feine Litze, einen Draht oder einen anderen faserförmigen Werkstoff handeln. Insbesondere kann das Faserelement ein Strang, insbesondere ein zusammenhängender Strang, sein, der beispielsweise genau ein Filament oder mehrere Filamente umfassen kann. Insbesondere kann das Faserelement ein Bündel, insbesondere in Faserbündel, aufweisen, welches mehrere, insbesondere nebeneinander angeordnete und insbesondere einzelne Filamente umfassen kann. Das Faserelement kann eine Verstärkungsfaser beziehungsweise ein Verstärkungsfaserelement sein.

Weist das Faserelement genau beziehungsweise lediglich ein Filament auf, so ist das Faserelement an sich als ein Filament oder Monofilament, das heißt als ein Verstärkungsfilament ausgebildet. Insbesondere ist es jedoch denkbar, dass das Faserelement mehrere Filamente, das heißt ein einfach auch als Bündel bezeichnetes Filament- oder Faserbündel mit mehreren Filamenten beziehungsweise Fasern aufweist. Das Filament ist beispielsweise aus Karbon beziehungsweise Kohlenstoff oder aber aus Glas gebildet, sodass das Faserelement als Kohlefaser oder Glasfaser ausgebildet sein kann. Andere Werkstoffe sind jedoch ohne weiteres denkbar, sodass das Faserelement beispielsweise als Aramidfaser oder andere Verstärkungsfaser ausgebildet sein kann. Außerdem sind alternativ oder zusätzlich nicht-Verstärkungselemente denkbar. Das Faserelement kann optisch und/oder elektrisch leitfähig sein. Das Faserelement kann somit aus einem elektrisch leitfähigen Werkstoff, insbesondere metallischen Werkstoff, gebildet sein. Alternativ oder zusätzlich kann das Faserelement aus einem optisch leitfähigen Werkstoff wie beispielsweise Glas gebildet sein.

Unter dem Merkmal, dass das Faserelement mittels der Vorrichtung mit dem Matrixmaterial versehen werden kann beziehungsweise versehen wird, ist insbesondere zu verstehen, dass das Faserelement und somit das Filament beispielsweise mit dem Matrixmaterial imprägniert oder getränkt oder infiltriert oder beschichtet werden. Insbesondere wird das Faserelement beispielsweise zumindest außenumfangsseitig mit dem Matrixmaterial versehen und somit mit dem Matrixmaterial beschichtet.

Die Vorrichtung weist ein Gehäuse auf, in welches das Matrixmaterial einbringbar ist beziehungsweise eingebracht wird. Die Vorrichtung umfasst ferner eine beispielsweise als Axialförderschnecke ausgebildete Förderschnecke, welche zumindest teilweise, insbesondere zumindest überwiegend oder vollständig, in dem Gehäuse, insbesondere in einem durch das Gehäuse begrenzten Aufnahmeraum, angeordnet ist. Die Förderschnecke verläuft dabei zumindest in einem in dem Gehäuse angeordneten beziehungsweise aufgenommenen Längenbereich der Förderschnecke konisch, sodass die Förderschnecke zumindest in dem Längenbereich einen konischen Verlauf aufweist. Außerdem ist die Förderschnecke um eine Drehachse relativ zu dem Gehäuse drehbar. Mittels der Förderschnecke ist unter Drehen der Förderschnecke, das heißt dadurch, dass die Förderschnecke um die Drehachse relativ zu dem Gehäuse gedreht wird, das in das Gehäuse eingebrachte Matrixmaterial in eine Förderrichtung beziehungsweise entlang einer Förderrichtung zu fördern. Außerdem ist mittels der Förderschnecke unter Drehen der Förderschnecke das in das Gehäuse eingebrachte Matrixmaterial mit einem Druck beaufschlagbar. Dies bedeutet, dass das in das Gehäuse eingebrachte Matrixmaterial mittels der Förderschnecke dadurch, dass die Förderschnecke gedreht wird, unter Druck gesetzt wird beziehungsweise unter Druck gesetzt werden kann. Wieder mit anderen Worten ausgedrückt kann mittels der Förderschnecke, dadurch, dass die Förderschnecke um die Drehachse relativ zu dem Gehäuse gedreht wird, ein Druck auf das Matrixmaterial ausgeübt beziehungsweise bewirkt werden, dass das in das Gehäuse eingebrachte Matrixmaterial einen Druck, welcher vorzugsweise größer oder kleiner als der atmosphärische Druck ist, aufweist. Beispielsweise ist das in das Gehäuse eingebrachte Matrixmaterial mittels der Förderschnecke unter Drehen der Förderschnecke komprimierbar.

Die Vorrichtung umfasst darüber hinaus wenigstens einen innerhalb der Förderschnecke verlaufenden Imprägnierungskanal, durch welchen das Faserelement, insbesondere in eine mit der Drehachse zusammenfallende beziehungsweise parallel zur Drehachse verlaufende Bewegungsrichtung, hindurchförderbar ist. Der Imprägnierungskanal verläuft vorzugsweise zumindest im Wesentlichen geradlinig beziehungsweise entlang einer Geraden, sodass das Faserelement besonders vorteilhaft und reibungsarm durch den Imprägnierungskanal hindurchgefördert werden kann.

Außerdem weist die Vorrichtung wenigstens einen innerhalb der Förderschnecke verlaufenden Verbindungskanal auf. Da beispielsweise der Imprägnierungskanal und der Verbindungskanal innerhalb der Förderschnecke verlaufen, sind der Imprägnierungskanal und der Verbindungskanal, welche zusammenfassend auch als Kanäle bezeichnet werden, Bestandteile der Förderschnecke beziehungsweise die Förderschnecke weist die Kanäle auf. Über den Verbindungskanal kann das Matrixmaterial aus dem Matrixkanal in den Imprägnierungskanal, insbesondere aufgrund des Drucks, geführt werden. Mit anderen Worten ist der Matrixkanal über den Verbindungskanal fluidisch mit dem Imprägnierungskanal verbunden. Dies bedeutet, dass der Verbindungskanal den Matrixkanal mit dem Imprägnierungskanal fluidisch verbindet, da der Verbindungskanal einerseits fluidisch mit dem Matrixkanal und andererseits fluidisch mit dem Imprägnierungskanal verbunden ist. Dadurch kann beispielsweise das Matrixmaterial aus dem Matrixkanal in den Verbindungskanal einströmen und den Verbindungskanal durchströmen. Außerdem kann das den Verbindungskanal durchströmende Matrixmaterial aus dem Verbindungskanal ausströmen und in den Imprägnierungskanal einströmen.

Bei dem Versehen des Faserelements mit dem Matrixmaterial strömt beispielsweise das Matrixmaterial aufgrund des zuvor genannten und mittels der Förderschnecke bewirkten Drucks des Matrixmaterials im Matrixkanal aus dem Matrixkanal in den Verbindungskanal, durch den Verbindungskanal und aus dem Verbindungskanal in den Imprägnierungskanal. Hierdurch ist das Faserelement in dem Imprägnierungskanal mit dem Matrixmaterial zu versehen, insbesondere zu imprägnieren. Die erfindungsgemäße Vorrichtung ermöglicht eine zumindest im Wesentlichen kontinuierliche Imprägnierung des Faserelement mit dem Matrixmaterial, da das Faserelement zumindest im Wesentlichen kontinuierlich durch den Imprägnierungskanal gefördert, das Matrixmaterial zumindest im Wesentlichen kontinuierlich aus dem Matrixkanal über den Verbindungskanal in den Imprägnierungskanal geführt und dadurch das Faserelement mit dem in den Imprägnierungskanal einströmenden Matrixmaterial versehen werden kann, insbesondere während beispielsweise zumindest im Wesentlichen kontinuierlich Matrixmaterial in das Gehäuse eingebracht wird.

Insbesondere ermöglicht die erfindungsgemäße Vorrichtung eine in-situ-Imprägnierung des vorzugsweise als Endlosfaser beziehungsweise als Endlosverstärkungsfaser ausgebildeten Faserelements mit dem Matrixmaterial. Insbesondere ermöglicht die erfindungsgemäße Vorrichtung eine in-situ-Imprägnierung des Faserelements mit dem Matrixmaterial sowie eine Extrusion des Faserelements oder die erfindungsgemäße Vorrichtung schafft zumindest eine Voraussetzung für die zuvor genannte Extrusion des mit dem Matrixmaterial versehenen Faserelements, sodass die erfindungsgemäße Vorrichtung besonders vorteilhaft für generative Fertigungsverfahren und dabei insbesondere für generative Extrusionsverfahren verwendet werden kann.

Die erfindungsgemäße Vorrichtung ermöglicht es dabei, das mit dem Matrixmaterial versehene Faserelement für ein generatives Fertigungsverfahren bereitzustellen, sodass beispielsweise wenigstens ein Bauelement aus dem mit dem Matrixmaterial versehenen Faserelement, welches in mit dem Matrixmaterial versehenen Zustand von der Vorrichtung bereitgestellt wird beziehungsweise bereitgestellt werden kann, hergestellt werden kann. Hierzu werden beispielsweise aus dem mit dem Matrixmaterial versehenen Faserelement, insbesondere auf einem Substrat, Schichten hergestellt und diese Schichten werden nebeneinander und/oder aufeinander beziehungsweise übereinander gestapelt, wodurch das Bauelement schichtweise aufgebaut wird, insbesondere ohne das mit dem Matrixmaterial versehene Faserelement nachdem es aus der Vorrichtung herausgeführt wird und bevor das Bauelement aus dem mit dem Matrixmaterial versehenen Faserelement aufgewickelt beziehungsweise zwischengelagert wird. Dadurch kann das Bauelement besonders zeit- und kostengünstig hergestellt werden.

Außerdem ermöglicht die erfindungsgemäße Vorrichtung eine zumindest im Wesentlichen gleichmäßige Imprägnierung des Faserelements, insbesondere des Faserbündels, mit dem Matrixmaterial, sodass lokale Faseranhäufungen sowie trockene Stellen, die nicht mit dem Matrixmaterial versehen sind, vermieden werden können.

Das Matrixmaterial wird beispielsweise in festem Zustand und/oder in Form von insbesondere fester, granularer Materie in das Gehäuse eingebracht und dann beispielsweise, insbesondere mittels der Förderschnecke und/oder mittels wenigstens eines Heizelements der Vorrichtung, erwärmt und dadurch an- und/oder aufgeschmolzen. Mit anderen Worten wird beispielsweise das zunächst feste, das heißt in festem Zustand vorliegende Matrixmaterial, welches in festem Zustand in das Gehäuse und/oder in Schneckengänge der Förderschnecke eingebracht wird, plastifiziert und dadurch in einen flüssigen beziehungsweise zähflüssigen, höherviskosen Zustand überführt, insbesondere indem das Matrixmaterial erwärmt beziehungsweise beheizt und dadurch geschmolzen oder plastifiziert wird.

In vorteilhafter Ausgestaltung der Erfindung nimmt durch den konischen Verlauf des Längenbereichs der Förderschnecke eine in radialer Richtung der Förderschnecke verlaufende Breite des Matrixkanals entlang der Förderrichtung ab. Hierdurch kann das Matrixmaterial bei seiner Förderung durch den Matrixkanal besonders vorteilhaftmit dem Druck beaufschlagt werden. Mit anderen Worten kann ein besonders hoher Wert des Drucks realisiert werden, sodass das Matrixmaterial auf besonders vorteilhafte Weise dazu gebracht wird, durch den Verbindungskanal zu strömen und somit über den Verbindungskanal aus dem Matrixkanal in den Imprägnierungskanal zu strömen. Insbesondere kann durch die abnehmende Breite das Matrixmaterial mittels der Förderschnecke besonders vorteilhaft komprimiert beziehungsweise verdichtet werden, sodass das Faserelement in dem Imprägnierungskanal besonders vorteilhaft mit dem Matrixmaterial versehen werden kann. Die radiale Richtung der Förderschnecke, deren axiale Richtung mit der Drehachse zusammenfällt, verläuft senkrecht zur Drehachse, sodass die Breite entlang einer senkrecht zur Drehachse verlaufenden Richtung verläuft.

Der beispielsweise auch als Förderkanal oder Schneckengang bezeichnete Matrixkanal ist in radialer Richtung der Förderschnecke beispielsweise einerseits durch die Förderschnecke, insbesondere durch einen Kern der Förderschnecke, und andererseits durch das Gehäuse, insbesondere durch eine innenumfangsseitige Mantelfläche des Gehäuses begrenzt, sodass sich beispielsweise die Breite in radialer Richtung der Förderschnecke von dem Kern bis zu der innenumfangsseitigen Mantelfläche beziehungsweise umgekehrt erstreckt.

Bei einer vorteilhaften Ausführungsform der Erfindung nimmt ein, sich insbesondere entlang einer parallel zur Drehachse verlaufenden beziehungsweise mit der Drehachse zusammenfallenden Richtung erstreckender, Abstand zwischen zwei einander zugewandten und einfach auch als Flanken bezeichneten Stegflanken der Förderschnecke, insbesondere von jeweiligen Stegen der Förderschnecke, entlang der Förderrichtung ab. Der zuvor beschriebene Abstand wird auch als Flankenabstand bezeichnet, welcher entlang der Förderrichtung beziehungsweise in die Förderrichtung abnimmt. Hierdurch kann eine besonders vorteilhafte Geometrie der Förderschnecke realisiert werden, sodass das Matrixmaterial besonders vorteilhaft gefördert und mit dem Druck beaufschlagt werden kann. Hierdurch kann gewährleistet werden, dass das Matrixmaterial zumindest im Wesentlichen kontinuierlich durch den Verbindungskanal strömt und somit in den Imprägnierungskanal einströmt. Alternativ oder zusätzlich kann gewährleistet werden, dass das Matrixmaterial mit einem vorteilhaften und insbesondere hinreichend hohen Druck in den Imprägnierungskanal einströmt, wodurch das Faserelement besonders gut mit dem Matrixmaterial versehen, insbesondere imprägniert, werden kann.

Eine weitere Ausführungsform zeichnet sich dadurch aus, dass die Vorrichtung mehrere weitere, innerhalb der Förderschnecke verlaufende Verbindungskanäle aufweist, über welchen das Matrixmaterial aus dem Matrixkanal in den Imprägnierungskanal zu führen ist. Die vorigen und folgenden Ausführungen zu dem ersten Verbindungskanal können ohne weiteres auch auf die weiteren Verbindungskanäle übertragen werden und umgekehrt. Vorzugsweise sind die Verbindungskanäle voneinander beabstandet. Alternativ oder zusätzlich kann der jeweilige Verbindungskanal an sich zumindest im Wesentlichen geradlinig verlaufen. Durch das Führen des Matrixmaterial aus dem Matrixkanal in den Imprägnierungskanal kann das Faserelement mit dem Matrixmaterial versehen, insbesondere imprägniert, werden. Dadurch, dass vorzugsweise mehrere Verbindungskanäle, insbesondere wenigstens ein, zwei oder drei oder mehr Verbindungskanäle oder demgegenüber mehr Verbindungskanäle zum Einsatz kommen, kann das Faserelement auf seinem Weg durch den Imprägnierungskanal besonders gleichmäßig mit dem Matrixmaterial imprägniert werden. Hierdurch können trockene Stellen im Kern des Faserelements vermieden werden.

Um das Faserelement besonders gleichmäßig mit dem Matrixmaterial versehen zu können, insbesondere während das Faserelement durch den Imprägnierungskanal hindurchgefördert wird, ist es in weiterer Ausgestaltung der Erfindung vorgesehen, dass die Verbindungskanäle helixartig angeordnet sind. Dies bedeutet beispielsweise, dass die Verbindungskanäle entlang einer gedachten und auch als Schraube oder Wendel bezeichneten Helix beziehungsweise Schraubenlinie angeordnet sind, sodass sich eine besonders gleichmäßige Imprägnierung des Faserelements mit dem Matrixmaterial realisieren lässt. Unter der helixartigen Anordnung der Verbindungskanäle ist beispielsweise zu verstehen, dass jeweilige erste Öffnungen, über die die Verbindungskanäle in den Matrixkanal münden, entlang einer gedachten Schraubenlinie angeordnet sind, die sich beispielsweise, insbesondere mit einer konstanten Steigung, um einen Mantel beziehungsweise um eine außenumfangsseitige Mantelfläche der Förderschnecke windet. Der jeweilige Verbindungskanal an sich muss nicht notwendigerweise helixförmig verlaufen, sondern ist vorzugsweise geradlinig ausgebildet beziehungsweise verläuft vorzugsweise geradlinig. Alternativ oder zusätzlich ist es denkbar, dass jeweilige zweite Öffnungen der Verbindungskanäle, die über die zweiten Öffnungen in den Imprägnierungskanal münden, entlang einer gedachten Helix beziehungsweise Schraube oder Schraubenlinie angeordnet sind, die sich beispielsweise insbesondere mit einer konstanten Steigung um einen Mantel, insbesondere um eine innenumfangsseitige Mantelfläche, der Förderschnecke windet. Durch die helixartige oder helixförmige Anordnung der Verbindungskanäle kann das Matrixmaterial besonders vorteilhaft in den Imprägnierungskanal eingeleitet werden, sodass das Faserelement, insbesondere auf seinem Weg durch den Imprägnierungskanal, besonders vorteilhaft mit dem Matrixmaterial versehen werden kann.

Als besonders vorteilhaft hat es sich dabei gezeigt, wenn der jeweilige Verbindungskanal in Strömungsrichtung des den jeweiligen Verbindungskanal durchströmenden Matrixmaterials angefast ist. Hierdurch kann das Matrixmaterial besonders vorteilhaft in den Imprägnierungskanal geleitet werden, sodass das Faserelement besonders vorteilhaft mit dem Matrixmaterial versehen werden kann.

Bei einer besonders vorteilhaften Ausführungsform der Erfindung weist die Vorrichtung wenigstens oder vorzugsweise genau einen innerhalb der Förderschnecke verlaufenden und mit dem Imprägnierungskanal verbundenen sowie sich in Richtung des Imprägnierungskanals verjüngenden Einführtrichter auf, in welchen das Faserelement einführbar ist. Dabei ist das Faserelement über den Einführtrichter in die Förderschnecke einführbar. Dabei ist das Faserelement in den Imprägnierungskanal über den Einführtrichter einleitbar oder einführbar. Der Einführtrichter ermöglicht eine vorteilhafte, schonende und präzise Zentrierung des Faserelements, sodass dieses reibungsarm und ohne zu stocken beziehungsweise ohne zu verklemmen in die Förderschnecke eingeführt und weiter in den Imprägnierungskanal geführt und durch diesen hindurch gefördert werden kann.

Dabei hat es sich als besonders vorteilhaft gezeigt, wenn der Einführtrichter eine reibungsmindernde Beschichtung, beispielsweise aus Teflon, aufweist. Hierdurch kann ein reibungsarmer und somit problemloser Prozess gewährleistet werden.

In weiterer Ausgestaltung der Erfindung ist zumindest oder vorzugsweise genau einem Teilbereich des Matrixkanals eine Heizeinrichtung zugeordnet, mittels welcher der zumindest eine Teilbereich, insbesondere elektrisch, das heißt vorzugsweise unter Nutzung von elektrischer Energie, beheizbar, insbesondere aktiv beheizbar, ist. Denkbar wäre auch eine Heizung, durch die ein Medium, insbesondere ein Fluid und beispielsweise eine Flüssigkeit wie zum Beispiel Öl strömt oder strömen kann und einen Kreislauf bildet. Demnach wäre auch eine passive Heizung denkbar. Auch andere Energieformen sind denkbar und teilweise Stand der Technik. Unter dem Merkmal, dass der zumindest eine Teilbereich aktiv beheizt werden kann, ist zu verstehen, dass die Heizeinrichtung aktiv Wärme bereitstellt, um dadurch den zumindest einen Teilbereich zu beheizen. Beispielsweise wandelt die Heizeinrichtung elektrische Energie, die der Heizeinrichtung zugeführt wird, in Wärmeenergie und somit in die Wärme, welche von der Heizeinrichtung bereitgestellt wird, um. Der zumindest eine Teilbereich ist dabei in radialer Richtung der Förderrichtung nach außen hin durch die Heizeinrichtung überdeckt.

Um dabei eine besonders vorteilhafte Strömung des Matrixmaterials aus dem Matrixkanal durch den Verbindungskanal und somit in den Imprägnierungskanal sicherstellen zu können, ist es vorzugsweise vorgesehen, dass dem zumindest einen Teilbereich wenigstens ein weiterer Teilbereich des Matrixkanals entlang der Förderrichtung vorweggeht, sodass sich der zumindest eine Teilbereich entlang der Förderrichtung an den weiteren Teilbereich anschließt. Dabei ist der weitere Teilbereich unbeheizbar oder unbeheizt oder sogar gekühlt. Dies bedeutet, dass der weitere Teilbereich frei von einer Heizeinrichtung ist. Wieder mit anderen Worten ausgedrückt ist bezogen auf die Teilbereiche lediglich der zumindest eine Teilbereich aktiv, das heißt mittels einer Heizeinrichtung, beheizbar. Hierdurch kann beispielsweise zwischen den Teilbereichen ein vorteilhaftes Temperaturgefälle des Matrixkanals und somit des Matrixmaterials realisiert werden, sodass dieses auf besonders vorteilhafte Weise dazu gebracht werden kann, über den Verbindungskanal aus dem Matrixkanal auszuströmen und in der Folge in den Imprägnierungskanal einzuströmen.

Schließlich hat es sich als besonders vorteilhaft gezeigt, wenn die Heizeinrichtung an dem Gehäuse gehalten ist, sodass der zumindest eine Teilbereich in radialer Richtung der Förderschnecke nach außen durch die Heizeinrichtung überdeckt ist. Dadurch können der zumindest eine Teilbereich und das Matrixmaterial besonders vorteilhaft aktiv beheizt werden.

Der Erfindung liegt insbesondere die folgende Erkenntnis zugrunde: Im Allgemeinen besitzen faserverstärkte Bauteile beziehungsweise Bauelemente gegenüber unverstärkten Bauteilen aus mechanischer Sicht eine höhere Zugfestigkeit, Elastizität und Steifigkeit. In Kombination mit ihrem sehr günstigen Dauerschwingverhalten, ihrer Korrosionsbeständigkeit, ihrer äußerst niedrigen Wärmeausdehnung und ihrem vergleichsweise guten Dämpfungsvermögen bei gleichzeitig sehr geringer Dichte sind Faserverbundwerkstoffe, das heißt faserverstärkte Bauteile, in vielen technischen Anwendungen besonders vorteilhaft.

Um beispielsweise die Vorteile eines generativen Fertigungsverfahrens, insbesondere eines FLM-Prozesses, insbesondere im Hinblick auf eine Geometriefreiheit in 3D, und die Vorteile der Endlosfaserverstärkung nutzen können, müssen entweder komplett neue Halbzeuge entwickelt werden, die dann in einem sich anschließenden, separativen, additiven Prozess verarbeitet werden, oder es wird ein kombinierter, hybrider Prozess geschaffen, in welchem wenigstens ein beispielsweise als Endlosfaser ausgebildetes Faserelement beziehungsweise ein Faserbündel aus Fasern, insbesondere Verstärkungsfasern, wobei das Faserelement beziehungsweise das Faserbündel zunächst nicht imprägniert und somit trocken ist, mit einem auch als Matrixwerkstoff bezeichneten Matrixmaterial versehen, insbesondere imprägniert, und anschließend, insbesondere als ein Einzelstrang, extrudiert wird. Somit sieht beispielsweise eine erste Variante vor, dass das mit dem Matrixmaterial versehene Faserelement aus dem Imprägnierungskanal, insbesondere aus der Vorrichtung insgesamt, herausgeführt und dann beispielsweise, insbesondere zu einer Spule, aufgewickelt sowie beispielsweise gelagert wird. Nach dem Herausführen und vor dem Aufwickeln wird das mit dem Matrixmaterial versehene Faserelement beispielsweise abgeschreckt, insbesondere in einem Wasserbad. Das mit dem Matrixmaterial versehene Faserelement bildet somit beispielsweise ein Halbzeug, welches beispielsweise aufgewickelt und gelagert werden kann. Daran anschließend kann das Halbzeug einem insbesondere generativen Fertigungsverfahren zugeführt werden, um im Rahmen des generativen Fertigungsverfahrens aus dem Halbzeug wenigstens ein Bauelement additiv zu fertigen. Diese erste Variante kann mittels der erfindungsgemäßen Vorrichtung auf besonders einfache und vorteilhafte Weise umgesetzt werden.

Eine zweite Variante sieht vor, das mit dem Matrixmaterial versehen Faserelement aus dem Imprägnierungsmaterial, insbesondere aus der Vorrichtung, herauszuführen und - ohne das mit dem Matrixmaterial versehene Faserelement aufzuwickeln beziehungsweise zwischenzulagern und/oder abzuschrecken - gleich auf ein Substrat aufzubringen, insbesondere derart, dass aus dem mit dem Matrixmaterial versehenen Faserelement Schichten hergestellt werden, die auf dem Substrat aufeinander angeordnet werden. Hierdurch kann wenigstens ein Bauelement durch ein generatives Fertigungsverfahren, insbesondere durch 3D-Drucken, schichtweise, das heißt Schicht für Schicht, hergestellt werden. Mittels der Vorrichtung wird beispielsweise das mit dem Matrixmaterial versehene Faserelement auf das Substrat gedruckt, wodurch das Bauelement auf das Substrat gedruckt wird. Bei der zweiten Variante erfolgen somit eine Imprägnierung und eine Extrusion des mit dem Matrixmaterial versehenen Faserelements.

Sowohl bei der Imprägnierung als auch bei der Extrusion liegt die Schwierigkeit in der Realisierung einer zumindest im Wesentlichen homogenen Imprägnierung des Faserelements mit dem auch als Matrixwerkstoff bezeichneten Matrixmaterial sowie in einer gleichmäßigen Verteilung von beispielsweise handelsüblichen Endlosfasern der Faserelements in dem Matrixmaterial. Das Matrixmaterial bildet dabei eine Matrix, in die Faserelement beziehungsweise jeweilige Filamente des Faserelements einzubetten sind. Das jeweilige Filament an sich kann als eine Endlosfaser ausgebildet sein. Die sich beispielsweise an das Versehen des Faserelements mit dem Matrixmaterial anschließende Extrusion des mit dem Matrixmaterial versehenen Faserelements, das dann eine imprägnierte Faser bildet, kann ebenfalls mittels der erfindungsgemäßen Vorrichtung auf besonders vorteilhafte Weise realisiert werden, wobei durch die Extrusion der imprägnierten Faser eine direkte, additive Fertigung beziehungsweise Herstellung des als Faserverbundbauteil ausgebildeten Bauelements ermöglicht wird. Insbesondere ermöglicht somit die Vorrichtung eine Durchführung eines generativen Fertigungsverfahrens in Form eines FLM-, FFF- oder FDM-Verfahrens. Mit anderen Worten ermöglicht es die erfindungsgemäße Vorrichtung, der Imprägnierung des Faserelements unmittelbar eine Extrusion des mit dem Matrixmaterial versehenen Faserelements anzuschließen, um durch die Extrusion das Bauelement auf die beschriebene Weise herzustellen.

Kommerzielle Filamentanlagen sind üblicherweise nicht verfügbar. Das beispielsweise bei der ersten Variante als Halbzeug hergestellte, mit dem Matrixmaterial versehene Verstärkungsfaserelement, welches beispielsweise als endlosfaserverstärktes Filament, insbesondere als endlosfaserverstärktes Filament, ausgebildet ist, kann in einem separaten Prozess insbesondere durch spezielle 3D-Drucker, weiterverarbeitet werden. Untersuchungen haben gezeigt, dass bei herkömmlichen, mit Matrixmaterial versehenen Verstärkungsfaserelementen, insbesondere bei herkömmlichen imprägnierten Rovings, Schlaufen in der Matrix existieren, welche beispielsweise dadurch entstehen können, dass flächige, vorimprägnierte Rovings unter Temperatur und der Zugabe von Matrixmaterial wie beispielsweise Polyamid nachträglich durch eine enge Düse gezogen werden. Dies ist für die spätere Verarbeitung und die Qualität des Bauelements sehr nachteilig. Diese Probleme und Nachteile können mittels der erfindungsgemäßen Vorrichtung vermieden werden. Bei einem bloßen Umspritzen eines Rovings ohne Druck an einem Düsenende verbleiben im Kern des Rovings trockene Fasern, die nicht von Matrixmaterial umhüllt sind und deshalb keinen strukturellen Zusammenhalt bieten. In Kombination mit einer inhomogenen Faserverteilung führen diese Fehlstellen letztlich zu einer Schwächung des gesamten Verbunds, der dadurch erheblich an Festigkeit verliert. Auch diese Probleme und Nachteile können durch die erfindungsgemäße Vorrichtung vermieden werden.

Die Erfindung löst das eigentliche Problem, die Imprägnierung und die Extrusion des Verstärkungsfaserelements in zumindest nahezu gleichbleibender Qualität zu beherrschen, in einem Prozess zusammenzufassen und gleichzeitig die auch als Reaktor bezeichnete Vorrichtung so kompakt zu halten, dass die auch als Einheit bezeichnete Vorrichtung Platz in einer CNC-Maschine findet. Während somit beispielsweise ein bereits mit dem Matrixmaterial versehener erster Längenbereich des Verstärkungsfaserelements, insbesondere mittels der Vorrichtung, extrudiert wird, wird ein sich an den ersten Längenbereich anschließender zweiter Längenbereich des Verstärkungsfaserelements mittels der Vorrichtung und insbesondere in der Vorrichtung mit dem Matrixmaterial versehen.

Die erfindungsgemäße Vorrichtung enthält als Eingang das beispielsweise als Roving mit Glasfasern ausgebildete Verstärkungsfaserelement und das Matrixmaterial, welches beispielsweise aus Polyamid gebildet ist. Das Verstärkungsfaserelement wird durch den zentrierten, konischen und auch als Einzug bezeichneten Einführtrichter in die auch als Düsenrichtung bezeichnete Förderrichtung gefördert. Die Vorrichtung weist beispielsweise wenigstens oder genau eine Austrittsöffnung auf, über die das mit dem Matrixmaterial versehene Verstärkungsfaserelement aus der Vorrichtung austreten kann. Die Austrittsöffnung bildet beispielsweise eine Düse oder ist Bestandteil einer Düse, welche sich nicht notwendigerweise in eine Austrittsrichtung, in die das mit dem Matrixmaterial versehene Verstärkungsfaserelement aus der Vorrichtung beziehungsweise aus dem Imprägnierungskanal austritt, verjüngen muss. Die Austrittsrichtung fällt beispielsweise mit der zuvor beschriebenen Bewegungsrichtung und/oder mit der Drehachse zusammen beziehungsweise verläuft parallel zu der Drehachse.

Insbesondere während das Verstärkungsfaserelement durch den Imprägnierungskanal gefördert und/oder durch die Austrittsöffnung hindurchgefördert und somit aus der Vorrichtung herausgefördert wird, wird das Matrixmaterial, insbesondere durch wenigstens eine Öffnung in einem Lagerdeckel der Vorrichtung, in den Matrixkanal beziehungsweise in das Gehäuse eingebracht. Der Matrixkanal ist ein freier Raum zwischen der sich drehenden, einfach auch als Schnecke bezeichneten Förderschnecke und dem Gehäuse, insbesondere der zuvor genannten, innenumfangsseitigen Mantelfläche des Gehäuses. Die innenumfangsseitige Mantelfläche des Gehäuses wird auch als Mantelwand bezeichnet.

Vorzugsweise ist es vorgesehen, dass der Matrixkanal beziehungsweise die Mantelwand in dem weiteren Teilbereich, welcher beispielsweise ein oberer Bereich ist, nicht beheizt wird, damit das Matrixmaterial möglichst hochviskos bleibt, insbesondere in dem weiteren Teilbereich. In dem zumindest einen Teilbereich jedoch, welcher ein unterer Teilbereich sein kann, wird die Mantelwand beziehungsweise der Matrixkanal beheizt, beispielsweise mithilfe wenigstens einer Heizmanschette. Hierdurch wird das Matrixmaterial erwärmt und insbesondere aufgeschmolzen. Durch die Wärmeleitung im gesamten Reaktor wird auch das Verstärkungsfaserelement vorgeheizt. Durch die sich drehende, konische Förderschnecke wird das Matrixmaterial, insbesondere in Düsenrichtung, verdichtet, entlüftet, geschmolzen, durchmischt und gefördert. Durch eine entsprechende Flankengeometrie von jeweiligen Stegflanken der Förderschnecke und durch den kleiner werdenden Flankenabstand baut sich insbesondere nach unten hin beziehungsweise in Richtung der Austrittsöffnung beziehungsweise in Richtung des jeweiligen Verbindungskanals ein hoher Druck des Matrixmaterials auf, wobei dieser Druck durch den kontinuierlichen Nachschub an Matrixmaterial quasi statisch aufrechterhalten wird. Unter dem kontinuierlichen Nachschub an Matrixmaterial ist zu verstehen, dass zumindest im Wesentlichen kontinuierlich neues Matrixmaterial in das Gehäuse und somit in den Matrixkanal eingebracht wird.

Die einzige Möglichkeit für das Matrixmaterial, den mittels der Förderschnecke bewirkten Druck des Matrixmaterials abzubauen, bietet sich durch die beispielsweise als Bohrungen ausgebildeten Verbindungskanäle, die in einem definierten Winkel helixartig auf dem auch als Faserkanal bezeichneten Imprägnierungskanal, welcher sich beispielsweise weitet, stehen und entlang der gewünschten Strömungs- oder Fließrichtung angefast sind. Durch das beschriebene Erwärmen beziehungsweise Beheizen des zunächst festen oder hochviskosen Matrixmaterials wird aus dem zunächst festen oder flüssigen und dabei hochviskosen Matrixmaterial eine demgegenüber flüssigere beziehungsweise niedrigviskose Matrixmaterialmasse, die, insbesondere mittels des Drucks, durch die Verbindungskanäle in den Imprägnierungskanal gepresst wird und in der Folge unter Druck das Verstärkungsfaserelement imprägniert. Durch den hohen Druck wird eine gute Imprägnierung und Tränkung des Verstärkungsfaserelements, insbesondere von Einzelfasern beziehungsweise Filamenten des Verstärkungsfaserelements, gewährleistet. Der Druck des Matrixmaterials kann nicht über eine Matrixmaterialzufuhr, über welche das Matrixmaterial in das Gehäuse und insbesondere in den Matrixkanal eingebracht wurde beziehungsweise wird, abgebaut werden, da das Matrixmaterial in dem oberen Bereich des Reaktors aufgrund fehlender Wärmezufuhr aufgrund von fehlender Beheizung entsprechend hochviskos, das heißt zähflüssig oder fest, ist. Letztendlich wird das imprägnierte Verstärkungsfaserelement, welches in seinem mit dem Matrixmaterial imprägnierten Zustand genau oder wenigstens eine imprägnierte Endlosfaser oder aber mehrere imprägnierte Endlosfasern umfassen kann, durch die Austrittsöffnung extrudiert beziehungsweise aus der Vorrichtung ausgetragen. Vorzugsweise erstreckt sich die Austrittsöffnung geradlinig beziehungsweise entlang einer Geraden, die beispielsweise mit der Drehachse zusammenfällt oder parallel zur Drehachse verläuft.

Nach dem Austragen des imprägnierten Verstärkungsfaserelements aus der Vorrichtung kann beispielsweise gemäß Variante 1 ein Wasserbad dafür sorgen, dass das imprägnierte Verstärkungsfaserelement, welches ein neu erzeugtes Halbzeug darstellt, gekühlt und anschließend aufgewickelt beziehungsweise aufgespult wird. Dann steht das imprägnierte Verstärkungsfaserelement als Halbzeug einem beliebigen, nachgelagerten Prozess, insbesondere einem beliebigen, nachgelagerten Fertigungsverfahren, zur Verfügung. Alternativ ist es möglich, das imprägnierte Verstärkungsfaserelement gemäß der zweiten Variante direkt zu dem Bauelement zu verarbeiten, ohne dass das imprägnierte Verstärkungsfaserelement nach dem Austragen aus der Vorrichtung aufgewickelt und/oder aktiv beziehungsweise gezielt gekühlt wird.

Die Austrittsöffnung erstreckt sich beispielsweise durch eine Komponente, welche separat von der Förderschnecke ausgebildet sowie separat von dem Gehäuse ausgebildet sein kann. Somit ist die Förderschnecke um die Drehachse relativ zu der Komponente drehbar. Dabei ist beispielsweise eine Labyrinthdichtung vorgesehen, mittels welcher die Komponente gegen die Förderschnecke oder gegen das Gehäuse abgedichtet ist. Diese Labyrinthdichtung sorgt für eine hinreichende Dichtigkeit des gesamten Reaktors.

Wie zuvor erwähnt, lässt sich durch die erfindungsgemäße Vorrichtung eine In-situ-Imprägnierung und Extrusion realisieren. Durch diese In-situ-Imprägnierung und Extrusion werden zwei Prozesse zu einem zusammengefasst und insgesamt verbessert. Anschlussmaße der Vorrichtung belaufen sich beispielsweise auf 170 mm * 115 mm, was den kompakten Direkteinbau der Vorrichtung in eine CNC-Maschine möglich macht. Dadurch können auch besonders komplexe Geometrien des Bauelements auf einfache und kostengünstige Weise gewährleistet werden.

Der Vorteil der Erfindung liegt insbesondere in der Kombination von verschiedenen Verfahren und Elementen auf Basis etablierter Prozesse wie der Faserverbundtechnik, des Kunststoffspritzgießens und der additiven Fertigung, wodurch sich die Möglichkeit eröffnet, einen neuen Fertigungsprozess für Endlosfaserverbunde zu schaffen, der sich durch einen einzelnen Schritt vom Rohstoff bis zum fertigen Bauteil auszeichnet. Die Erfindung ermöglicht es, sowohl das Halbzeug im Prozess selbst herzustellen als auch das soeben hergestellte Halbzeug in Form des imprägnierten Faserelements direkt zu dem Bauelement zu formen beziehungsweise zu verarbeiten. Die Zusammenfassung beider Prozessschritte (Imprägnierung und Extrusion) zu einem und die Verwendung von handelsüblichen Rohstoffen insbesondere im Hinblick auf herkömmliche Rovings und Matrixmaterialien ermöglichen überhaupt erst einen direkten Fertigungsprozess und machen damit den bisherigen Prozess kürzer und stabiler, kostengünstiger, transparenter und leistungsfähiger.

Durch die Erfindung wird es überhaupt erst möglich, endlosfaserverstärkte Bauelemente in einem einzigen Prozessschritt herzustellen. Durch den früheren Einstieg in die Wertschöpfungskette ist die Wertschöpfung durch die eigentliche Erfindung entsprechend tief. Durch die Parallelisierung der Halbzeugherstellung im oberen Bereich der Förderschnecke insbesondere im Hinblick auf die Imprägnierung und der gleichzeitigen Extrusion des soeben hergestellten Halbzeugs werden nicht nur separate Maschinen und Produktionslinien eingespart, sondern es ergibt sich neben der transparenten Qualitätskontrolle auch eine enorme Zeit- und damit Kostenersparnis. Dadurch, dass durch die Parallelisierung der Prozesse sowohl Zeit eingespart wird als auch die Wertschöpfung an sich tiefergehend ist, steigert sich die Leistung des Gesamtprozesses um ein Vielfaches.

Insbesondere ergeben sich technische Vorteile durch die Zusammenfassung von Halbzeug- und Bauelementherstellung in einem einzigen, additiven Fertigungsprozess mittels der erfindungsgemäßen Vorrichtung. Die Rohstoffe für diesen Direktprozess, das heißt das Faserelement und das Matrixmaterial, können Standardwerkstoffe sein, die in industriellen Mengen gehandelt werden und dementsprechend preislich wettbewerbsfähig sind. Hierzu zählt insbesondere die Temperaturführung durch die Heizeinrichtung, welche mehrere Heizelemente umfassen kann. Die Heizeinrichtung, insbesondere die Heizelemente, kann beziehungsweise können dem Matrixmaterial an zumindest nahezu jeder Stelle des Reaktors eine gewünschte Temperatur und somit Viskosität geben und nebenbei das beispielsweise als Roving, das heißt als Faserbündel ausgebildete Faserelement, vorheizen, damit jeweilige Temperaturen bei einer Zusammenführung des Faserelements und des Matrixmaterials, das heißt bei der Imprägnierung, zumindest nahezu annähernd gleich sind.

Besonders vorteilhaft sind die antreibbare beziehungsweise angetriebene und somit relativ zu dem Gehäuse drehbare beziehungsweise sich drehende und einfach auch als Schnecke bezeichnete Förderschnecke und ihre Geometrie. Durch den konischen Verlauf, den sinkenden beziehungsweise abnehmenden Flankenabstand und die helixartig, insbesondere um den Imprägnierungskanal, angeordneten, in Fließrichtung angefasten Verbindungskanäle kann ein entsprechender Druck des Matrixmaterials erhöht beziehungsweise aufgebaut werden, wobei dieser Druck für die Imprägnierung des Faserelements maßgeblich und vorteilhaft ist. Der Einführtrichter ermöglicht einen konischen Fasereinzug und ist hierfür entsprechend geformt und vorzugsweise beschichtet, damit das Faserelement problemlos in die Vorrichtung eingezogen werden kann.

Die Austrittsöffnung ist beispielsweise ein zumindest im Wesentlichen gerader Kanal, insbesondere Düsenkanal, welcher sich beispielsweise direkt beziehungsweise unmittelbar an den Imprägnierungskanal anschließt. Dabei weisen vorzugsweise der Imprägnierungskanal und der Düsenkanal den gleichen, von dem Faserelement durchströmbaren Querschnitt auf. Vorzugsweise ist der Imprägnierungskanal geradlinig ausgebildet. Der gerade Düsenkanal verhindert, dass sich das Faserelement an einem Übergang von dem Imprägnierungskanal in den Düsenkanal zwischen dem Förderelement und der Komponente aufbauschen kann. Ein zweiter Aspekt der Erfindung betrifft ein Verfahren zum Versehen wenigstens eines wenigstens ein Filament aufweisenden Faserelements mit einem Matrixmaterial. Bei einem ersten Schritt des Verfahrens wird das Matrixmaterial in ein Gehäuse einer Vorrichtung eingebracht, wobei in dem Gehäuse eine Förderschnecke der Vorrichtung zumindest teilweise, insbesondere zumindest überwiegend oder vollständig, angeordnet ist. Die Förderschnecke ist zumindest in einem in dem Gehäuse angeordneten Längenbereich konisch und um eine Drehachse relativ zu dem Gehäuse drehbar. Bei einem zweiten Schritt des Verfahrens wird die Förderschnecke um die Drehachse relativ zu dem Gehäuse gedreht, wodurch das in das Gehäuse eingebrachte Matrixmaterial in einer Förderrichtung durch wenigstens einen, durch die Förderschnecke und durch das Gehäuse begrenzten Matrixkanal hindurchgefördert wird. Außerdem wird durch das Drehen der Förderschnecke das Matrixmaterial in dem Matrixkanal mit einem Druck beaufschlagt. Dies bedeutet, dass mittels der Förderschnecke dadurch, dass die Förderschnecke gedreht wird, ein Druck des Matrixmaterials bewirkt, das heißt dass das Matrixmaterial mit einem Druck beaufschlagt wird.

Bei einem dritten Schritt des Verfahrens wird das Faserelement durch wenigstens einen innerhalb der Förderschnecke verlaufenden Imprägnierungskanal gefördert, wobei das Matrixmaterial über wenigstens einen innerhalb der Förderschnecke verlaufenden Verbindungskanal aus dem Matrixkanal in den Imprägnierungskanal geführt wird. Dies bedeutet, dass im Rahmen des erfindungsgemäßen Verfahrens das Matrixmaterial über den Verbindungskanal aus dem Matrixkanal in den Imprägnierungskanal aufgrund des bewirkten Drucks strömt. Hierdurch wird das Faserelement in dem Imprägnierungskanal mit dem Matrixmaterial versehen, insbesondere imprägniert. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Um beispielsweise aus dem imprägnierten Faserelement besonders vorteilhaft ein Halbzeug herstellen zu können, welches beispielsweise in einem nachgelagerten, separaten generativen Fertigungsverfahren weiterverarbeitet werden kann, ist es bei einer vorteilhaften Ausführungsform der Erfindung vorgesehen, dass das mit dem Matrixmaterial versehene oder dadurch imprägnierte Faserelement aus der Vorrichtung herausgeführt und, insbesondere in einem Wasserbad, abgekühlt, insbesondere abgeschreckt, wird. Hierdurch härtet beispielsweise das unmittelbar nach dem Herausführen des Faserelements aus der Vorrichtung noch flüssige beziehungsweise pastöse Matrixmaterial aus, sodass das imprägnierte Faserelement beispielsweise eigensteif beziehungsweise formstabil ist beziehungsweise wird.

Eine weitere Ausführungsform zeichnet sich dadurch aus, dass das mit dem Matrixmaterial versehene Faserelement nach dem Herausführen, insbesondere nach dem Abschrecken, aufgewickelt beziehungsweise aufgespult wird. Dadurch bildet das imprägnierte Faserelement ein Halbzeug, welches vorteilhaft gehandhabt und gelagert werden kann.

Um jedoch wenigstens ein Bauelement auf besonders zeit- und kostengünstige Weise additiv fertigen zu können, ist es in weiterer Ausgestaltung der Erfindung vorgesehen, dass das mit dem Matrixmaterial versehene Faserelement aus der Vorrichtung herausgeführt und unmittelbar danach, das heißt ohne weitere Verarbeitungsschritte und während es herausgeführt wird, auf ein Substrat derart aufgebracht wird, dass jeweilige Schichten aus dem mit dem Matrixmaterial versehenen Faserelement hergestellt und aufeinander angeordnet werden, um dadurch das genannte Bauteil additiv, das heißt durch ein generatives Fertigungsverfahren, herzustellen.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- FIG 1: eine schematische Schnittansicht einer erfindungsgemäßen Vorrichtung zum Versehen zumindest eines Faserelements mit einem Matrixmaterial;
- FIG 2: ausschnittsweise eine schematische Perspektivansicht einer Förderschnecke der Vorrichtung;
- FIG 3: ausschnittsweise eine schematische Perspektivansicht der Förderschnecke; und
- FIG 4: ausschnittsweise eine schematische und perspektivische Schnittansicht der Vorrichtung.

In den Figuren sind gleiche oder funktionsgleiche Elemente mit gleichen Bezugszeichen versehen.

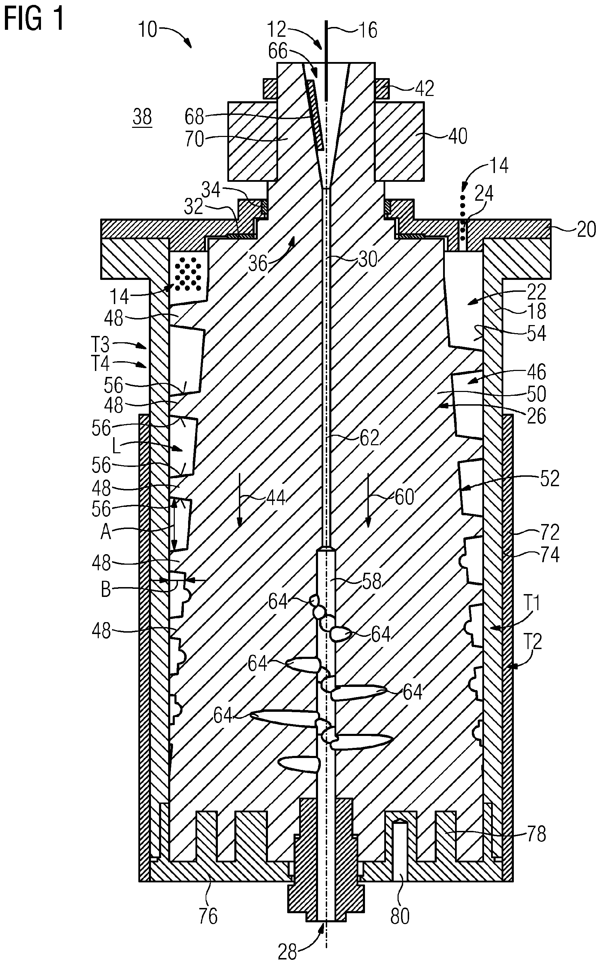

FIG 1 zeigt in einer schematischen Schnittansicht eine Vorrichtung 10 zum Versehen zumindest eines in FIG besonders schematisch dargestellten und als Verstärkungsfaserelement 12 ausgebildeten Faserelements mit einem in FIG 1 besonders schematisch dargestellten Matrixmaterial 14.

Das Verstärkungsfaserelement 12 an sich kann genau ein Filament 16 aufweisen und ist somit an sich als Filament, insbesondere als Monofilament, ausgebildet. Alternativ ist es denkbar, dass das Verstärkungsfaserelement 12 wenigstens oder genau ein auch als Roving bezeichnetes Faserbündel umfasst, welches wiederum mehrere Filamente aufweist. Das jeweilige Filament beziehungsweise das Verstärkungsfaserelement 12 ist vorzugsweise als eine Endlosfaser ausgebildet, sodass sich mittels des Verstärkungsfaserelements 12 eine Endlosfaserverstärkung realisieren lässt. Im Rahmen des Versehens des Verstärkungsfaserelements 12 mit dem Matrixmaterial 14 wird das Verstärkungsfaserelement 12 in das Matrixmaterial 14 und somit in eine durch das Matrixmaterial 14 gebildete Matrix eingebettet, wodurch beispielsweise ein faserverstärkter Kunststoff gebildet werden kann.

Die auch als Reaktor bezeichnete Vorrichtung 10 weist ein Gehäuse 18 auf, welches vorzugsweise einstückig ausgebildet ist. In das Gehäuse 18 ist das Matrixmaterial 14 einbringbar. Im Rahmen eines Verfahrens zum Versehen des Verstärkungsfaserelements 12 mit dem Matrixmaterial 14 wird das Matrixmaterial 14, insbesondere in festem Zustand, in das Gehäuse 18 eingebracht. Hierzu ist ein auch als Lagerdeckel bezeichneter Deckel 20 vorgesehen, wobei das Gehäuse 18 und der Deckel 20 als separat voneinander ausgebildete und miteinander verbundene Komponenten ausgebildet sein können. Das Gehäuse 18 und der Deckel 20 begrenzen jeweils teilweise einen Aufnahmeraum 22, in welchen das Matrixmaterial 14, insbesondere in festem Zustand, eingebracht wird. Hierzu weist der Deckel 20 wenigstens oder genau eine Durchgangsöffnung 24 auf, über welche das Matrixmaterial 14, insbesondere in zunächst festem Zustand, in den Aufnahmeraum 22 eingebracht, insbesondere eingefördert, wird. Insbesondere ist es vorgesehen, dass das Matrixmaterial 14 als granulare Materie, das heißt als Granulat, in das Gehäuse 18 eingebracht wird.

Die Vorrichtung 10 umfasst darüber hinaus eine einfach auch als Schnecke bezeichnete Förderschnecke 26, welche bei dem in FIG 1 veranschaulichten Ausführungsbeispiel überwiegend in dem Gehäuse 18 und dabei in dem Aufnahmeraum 22 angeordnet ist. Die Förderschnecke 26 weist dabei einen in dem Gehäuse 18 angeordneten Längenbereich L auf, wobei der gesamte, in dem Gehäuse 18 angeordnete Längenbereich L konisch verläuft. Die Vorrichtung 10 weist dabei eine auch als Düse bezeichnete Austrittsöffnung 28 auf, über welche das mit dem Matrixmaterial 14 versehene Verstärkungsfaserelement 12 aus der Vorrichtung 10 herausführbar ist beziehungsweise herausgeführt wird. Dabei verläuft der Längenbereich L in Richtung der Austrittsöffnung 28 derart konisch, dass sich der Längenbereich L beziehungsweise die Förderschnecke 26 in Richtung der Austrittsöffnung 28 konisch erweitert und in eine entgegengesetzte Richtung, das heißt in Richtung des Deckels 20, konisch verjüngt.

Die Förderschnecke 26 ist um eine Drehachse 30 relativ zu dem Gehäuse 18 und relativ zu dem Deckel 20 drehbar, wobei die Förderschnecke 26 im Rahmen des Verfahrens um die Drehachse 30 relativ zu dem Gehäuse 18 und relativ zu dem Deckel 20 gedreht wird. Dabei wird der Deckel 20 als Lagerdeckel genutzt, an welchem die Förderschnecke 26 drehbar gelagert ist. Dadurch ist die Förderschnecke 26 unter Vermittlung des Deckels 20 drehbar an dem Gehäuse 18 gelagert. Zur Lagerung der Förderschnecke 26 sind beispielsweise Lagerelemente 32 und 34 vorgesehen. Über das Lagerelement 32 ist die Förderschnecke 26 beispielsweise in ihrer axialen Richtung an dem Deckel 20 gelagert. Über das Lagerelement 34 ist beispielsweise die Förderschnecke 26 in ihrer radialen Richtung an dem Deckel 20 gelagert.

Außerdem ist die Förderschnecke 26 durch eine Durchgangsöffnung 36 des Deckels 20 hindurchgeführt und dadurch aus dem Aufnahmeraum 22 an eine Umgebung 38 der Vorrichtung 10 geführt, wobei das mit dem Matrixmaterial 14 versehene Verstärkungsfaserelement 12 über die Austrittsöffnung 28 an die Umgebung 38 herausgeführt werden kann. Zum Abdichten der Durchgangsöffnung 36 ist die Förderschnecke 26 gegen den Deckel 20 abgedichtet.

In der Umgebung 38 ist die Förderschnecke 26 zumindest drehfest mit einem Zahnrad 40 verbunden. Wird das Zahnrad 40 angetrieben und dadurch um die Drehachse 30 relativ zu dem Gehäuse 18 gedreht, so wird dadurch die Förderschnecke 26 um die Drehachse 30 relativ zu dem Gehäuse 18 gedreht. Dies bedeutet, dass beispielsweise das Zahnrad 40 von einem in FIG nicht dargestellten, insbesondere elektrischen, Antrieb antreibbar und dadurch um die Drehachse 30 relativ zu dem Gehäuse 18 drehbar ist. Hierdurch ist die Förderschnecke 26 um die Drehachse 30 relativ zu dem Gehäuse 18 drehbar. Um beispielsweise unerwünschte, in axialer Richtung der Förderschnecke 26 verlaufende Relativbewegungen zwischen dem Zahnrad 40 und der Förderschnecke 26 zu vermeiden, ist eine auf die Förderschnecke 26 aufgeschraubte Sicherungsmutter 42 vorgesehen. Mittels der Sicherungsmutter 42 ist das Zahnrad 40 entlang seiner axialen Richtung und in axialer Richtung der Förderschnecke 26 relativ zu der Förderschnecke 26 beziehungsweise an der Förderschnecke 26 gesichert.

Mittels der Förderschnecke 26 ist durch Drehen der Förderschnecke 26 das in das Gehäuse 18 beziehungsweise in den Aufnahmeraum 22 eingebrachte Matrixmaterial 14 in eine in FIG 1 durch einen Pfeil 44 veranschaulichte Förderrichtung zu fördern und dadurch mit einem Druck beaufschlagbar. Dies bedeutet, dass das in den Aufnahmeraum 22 eingebrachte Matrixmaterial 14 mittels der Förderschnecke 26 gefördert und mit einem Druck beaufschlagt wird, indem die Förderschnecke 26 gedreht wird. Unter dem Merkmal, dass das Matrixmaterial 14 mit dem genannten Druck beaufschlagt wird, ist zu verstehen, dass mittels der Förderschnecke 26 ein Druck des Matrixmaterials 14 in dem Gehäuse 18 bewirkt wird. Dabei weist die Vorrichtung 10 wenigstens oder genau einen, teilweise durch die Förderschnecke 26 und teilweise durch das Gehäuse 18 begrenzten Matrixkanal 46 auf, welcher beispielsweise ein zwischen Stegen 48 der Förderschnecke 26 verlaufender und durch die Stege 48 gebildeter beziehungsweise begrenzter Schneckengang der Förderschnecke 26 ist. In radialer Richtung der Förderschnecke 26 nach innen wird der Matrixkanal 46 durch einen auch als Kern bezeichneten Schneckenkern 50 der Förderschnecke 26, insbesondere durch eine außenumfangsseitige Mantelfläche 52 des Schneckenkerns 50, begrenzt. In radialer Richtung der Förderschnecke 26 nach außen wird der Matrixkanal 46 durch das Gehäuse 18, insbesondere durch eine innenumfangsseitige, der Förderschnecke 26 zugewandte Mantelfläche 54 des Gehäuses 18, begrenzt. Beispielsweise in axialer Richtung der Förderschnecke 26 wird der Matrixkanal 46 durch jeweilige, in axialer Richtung der Förderschnecke 26 einander zugewandte und auch als Schneckenflanken bezeichnete Flanken 56 der Förderschnecke 26, insbesondere von jeweiligen Stegen 48 der Förderschnecke 26, begrenzt.

Der beispielsweise als Schneckengang der Förderschnecke 26 ausgebildete Matrixkanal 46 erstreckt beziehungsweise windet sich beispielsweise helixartig, das heißt nach Art einer Helix, um den Schneckenkern 50, insbesondere um die außenumfangsseitige Mantelfläche 52. Auf diese Weise wird durch Drehen der Förderschnecke 26 das Matrixmaterial 14, welches dadurch, dass es in den Aufnahmeraum 22 eingebracht wird, in den Matrixkanal 46 eingebracht wird, entlang des Matrixkanals 46 und dabei in die Förderrichtung gefördert. Auf diese Weise wird das Matrixmaterial 14 in Richtung der Austrittsöffnung 28 (Düse) gefördert. Die konische Förderschnecke 26 ist somit beispielsweise zur Verdichtung, zum Druckaufbau, zur Aufschmelzung und zur Förderung des zunächst festen Matrixmaterials 14 ausgebildet. Durch das Aufschmelzen des zunächst festen Matrixmaterials 14 wird das zunächst feste Matrixmaterial 14 flüssig beziehungsweise pastös, sodass das zunächst feste und beispielsweise in Form von granularer Materie vorliegende Matrixmaterial 14 auf seinem Weg durch den Matrixkanal 46 geschmolzen und dadurch pastös beziehungsweise flüssig und in der Folge zu einer Schmelze oder zu einer pastösen beziehungsweise flüssigen Matrixmasse wird.

Die Vorrichtung 10 weist darüber hinaus wenigstens oder genau einen innerhalb der Förderschnecke 26 verlaufenden Imprägnierungskanal 58 auf, durch welchen das Verstärkungsfaserelement 12, insbesondere in eine mit der Drehachse 30 zusammenfallende und in FIG 1 durch einen Pfeil 60 veranschaulichte Bewegungsrichtung, hindurchförderbar ist beziehungsweise hindurchgefördert wird. Der Imprägnierungskanal 58 an sich weist vorzugsweise eine zumindest im Wesentlichen geradlinige und entlang der Drehachse 30 verlaufende Erstreckung auf. Außerdem weist der Imprägnierungskanal 58 an sich beispielsweise über seine gesamte Erstreckung einen zumindest im Wesentlichen konstanten Querschnitt auf, durch welchen das Verstärkungsfaserelement 12 hindurchgefördert wird.

Entlang der Bewegungsrichtung geht dem Imprägnierungskanal 58 ein so genannter Faserkanal 62 vorweg, welcher mit dem Imprägnierungskanal 58 verbunden ist. Dies bedeutet, dass das Verstärkungsfaserelement 12 zunächst durch den Faserkanal 62 hindurchgefördert und dann von dem Faserkanal 62 in den Imprägnierungskanal 58 gefördert wird. Auch der Faserkanal 62 weist eine entlang der Drehachse 30 verlaufende, geradlinige Erstreckung auf. Der zuvor beschriebene Querschnitt des Imprägnierungskanals 58 wird auch als erster Querschnitt bezeichnet. Dabei weist der Faserkanal 62 beispielsweise einen über seine vollständige Erstreckung zumindest im Wesentlichen konstanten zweiten Querschnitt auf, durch welchen das Verstärkungsfaserelement 12 hindurchgefördert wird. Der zweite Querschnitt ist dabei geringer als der erste Querschnitt.

Außerdem weist die Vorrichtung 10 mehrere, innerhalb der Förderschnecke 26 verlaufende Verbindungskanäle 64 auf, welche beispielsweise als Bohrungen ausgebildet sind. Über die Verbindungskanäle 64 ist der Matrixkanal 46 mit dem Imprägnierungskanal 58 fluidisch verbunden, sodass das Matrixmaterial 14, insbesondere in flüssigem beziehungsweise pastösem oder plastifiziertem Zustand, über die Verbindungskanäle 64 aus dem Matrixkanal 46 in den Imprägnierungskanal 58 strömen kann beziehungsweise strömt. Hierdurch wird das Verstärkungsfaserelement 12, insbesondere während es durch den Imprägnierungskanal 58 entlang des Imprägnierungskanals 58 gefördert wird, mit dem flüssigen, pastösen beziehungsweise plastifizierten Matrixmaterial 14 versehen, das heißt imprägniert. Das Matrixmaterial 14 wird beispielsweise durch das Aufschmelzen beziehungsweise Erwärmen plastifiziert.

Aus FIG 1 ist besonders gut erkennbar, dass durch den konischen Verlauf des Längenbereichs L eine in radialer Richtung der Förderschnecke 26 verlaufende Breite B des Matrixkanals 46 entlang der Förderrichtung beziehungsweise in die Förderrichtung abnimmt. Hierdurch kann das Matrixmaterial 14 besonders vorteilhaft verdichtet und somit auf einen besonders vorteilhaften und insbesondere hohen Druck gebracht werden.

Außerdem nimmt ein insbesondere in axialer Richtung der Förderschnecke 26 verlaufender Abstand A zwischen den jeweiligen, in axialer Richtung der Förderschnecke 26 einander zugewandten und auch als Stegflanken bezeichneten Flanken 56 der jeweiligen auch als Schneckenstege bezeichneten Stege 48 entlang der Förderrichtung beziehungsweise in die Förderrichtung ab.

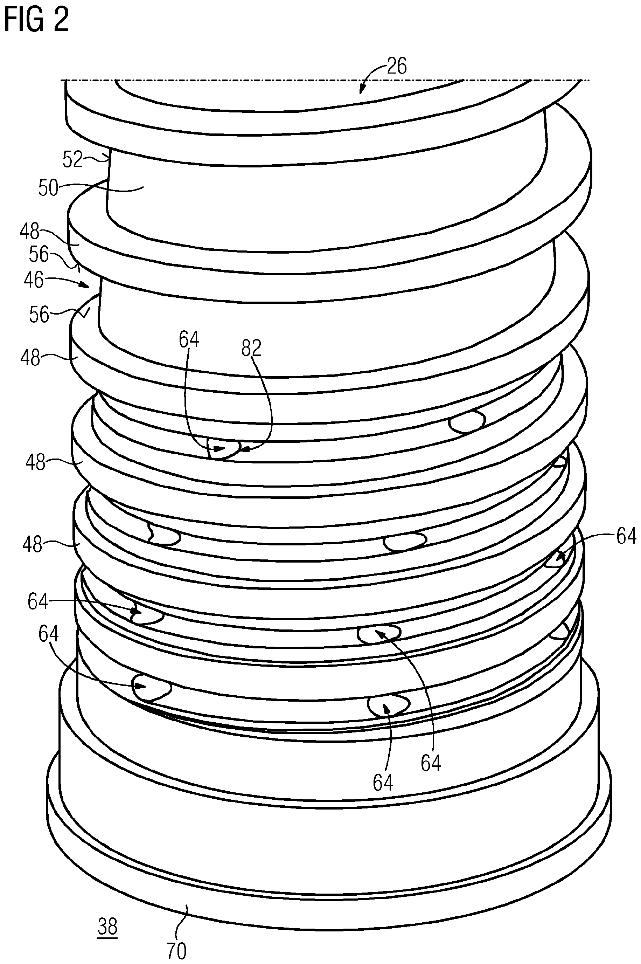

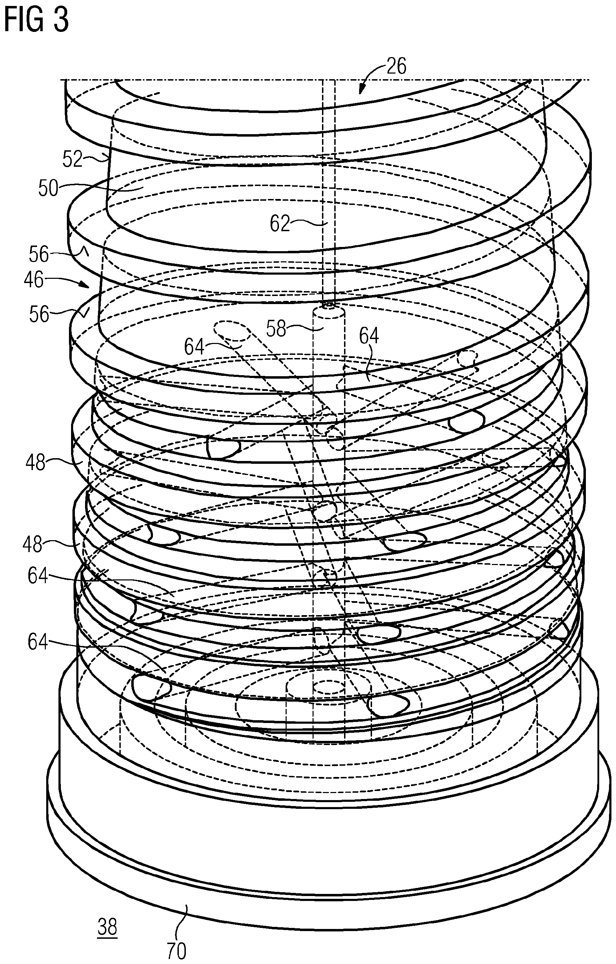

Des Weiteren ist besonders gut aus FIG 2 und 3 erkennbar, dass die Verbindungskanäle 64 helixartig, das heißt beispielsweise entlang einer gedachten, sich um die außenumfangsseitige Mantelfläche 52 windenden Schraubenlinie angeordnet sind. Hierbei liegen insbesondere jeweilige Mittelpunkte der an sich beispielsweise geradlinig verlaufenden Verbindungskanäle 64 auf der genannten, gedachten Schraubenlinie. Hierdurch kann das Matrixmaterial 14, insbesondere in flüssigem beziehungsweise pastösem oder plastifiziertem Zustand, besonders vorteilhaft in den Imprägnierungskanal 58 eingeleitet werden, wodurch das Verstärkungsfaserelement 12 besonders gleichmäßig mit dem Matrixmaterial 14 versehen, insbesondere getränkt, werden kann.

Da das Matrixmaterial 14 beispielsweise zunächst fest oder hochviskos ist und auf seinem Weg durch den Matrixkanal 46 erwärmt und dadurch in einen pastösen oder flüssigen Zustand gebracht beziehungsweise niedrigviskos wird, wird der Matrixkanal 46 auch als Schmelzkanal oder Matrixschmelzkanal bezeichnet. Des Weiteren ist es vorgesehen, dass die Verbindungskanäle 64 in Strömungsrichtung des die Verbindungskanäle durchströmenden Matrixmaterials 14 angefast sind. Dadurch kann das Matrixmaterial 14 besonders vorteilhaft in den Imprägnierungskanal 58 eingeleitet werden.

Darüber hinaus weist die Vorrichtung 10 einen innerhalb der Förderschnecke 26 angeordneten und mit dem Faserkanal 62 und über den Faserkanal 62 mit dem Imprägnierungskanal 58 verbundenen Einführtrichter 66 auf, welcher sich in Richtung des Imprägnierungskanals 58 beziehungsweise in die Bewegungsrichtung verjüngt. Das Verstärkungsfaserelement 12 wird dabei in den Einführtrichter 66 eingeführt und über den Einführtrichter 66 in die Förderschnecke 26 insgesamt eingeführt. Hierdurch sind der Faserkanal 62 und der Imprägnierungskanal 58 über den Einführtrichter 66 mit dem Verstärkungsfaserelement 12 versorgbar. Der Einführtrichter 66 ermöglicht einen konischen Fasereinzug oder ist ein konischer Fasereinzug, sodass das Verstärkungsfaserelement 12 auf besonders einfache und präzise Weise in die Förderschnecke 26 insgesamt eingeführt werden kann. Vorzugsweise weist der Einführtrichter 66 eine in FIG 1 besonders schematisch dargestellte und reibungsmindernde Beschichtung 68 auf, welche beispielsweise auf die Förderschnecke 26 beziehungsweise auf einen Grundkörper 70 der Förderschnecke 26 aufgebracht ist.

Des Weiteren ist es vorgesehen, dass einem ersten Teilbereich T1 des Matrixkanals 46 eine, insbesondere elektrische, Heizeinrichtung 72 zugeordnet ist. Der erste Teilbereich T1 ist in radialer Richtung der Förderschnecke 26 nach außen hin von einem ersten Teil T2 des Gehäuses 18 überdeckt, wobei der erste Teil T2 mit der Heizeinrichtung 72 versehen ist. Dadurch können mittels der Heizeinrichtung 72 der Teilbereich T1 und der Teil T2 aktiv beheizt und somit erwärmt werden, sodass das Matrixmaterial 14 auf seinem Weg durch den Matrixkanal 46 in dem Teilbereich T1 aktiv beheizt und somit aufgeschmolzen beziehungsweise plastifiziert werden kann.

Ein dem ersten Teilbereich T1 entlang der Förderrichtung vorweggehender zweiter Teilbereich T3 des Matrixkanals 46 jedoch ist unbeheizt oder wird gekühlt, sodass im Rahmen des Verfahrens eine aktive Beheizung des Teilbereichs T3 unterbleibt. Der zweite Teilbereich T3 ist in radialer Richtung der Förderschnecke 26 nach außen hin durch einen zweiten Teil T4 des Gehäuses 18 überdeckt. Dabei ist der Teil T4 frei von einer Heizeinrichtung, sodass der Teilbereich T3 und der Teil T4 nicht aktiv beheizt werden können. Dadurch kann sichergestellt werden, dass das sich in dem Matrixkanal 46 befindende Matrixmaterial 14 in dem Teilbereich T1 flüssiger beziehungsweise weniger viskos als in dem oberen Teilbereich T3 ist. Hierdurch kann vermieden werden, dass das Matrixmaterial 14 den genannten Druck dadurch abbaut, dass das Matrixmaterial 14 durch die Durchgangsöffnung 24 und wieder zurück an die Umgebung 38 strömt. Das Matrixmaterial 14 kann dadurch den zuvor beschriebenen Druck nur dadurch abbauen, dass das Matrixmaterial 14 in dem flüssigen Zustand durch die Verbindungskanäle 64 strömt und in den Imprägnierungskanal 58 einströmt.

Die Heizeinrichtung 72 ist beispielsweise als eine Heizmanschette ausgebildet. Bei dem in FIG 1 veranschaulichten Ausführungsbeispiel ist die Heizeinrichtung 72 auf einer außenumfangsseitigen Mantelfläche 74 des Gehäuses 18 angeordnet, wobei die außenumfangsseitige Mantelfläche 74 in radialer Richtung der Förderschnecke 26 der innenumfangsseitigen Mantelfläche 54 abgewandt ist.

Des Weiteren ist aus FIG 1 erkennbar, dass die beispielsweise als Austrittskanal ausgebildete und vorliegend geradlinig verlaufende Austrittsöffnung 28 in einer Komponente 76 ausgebildet ist, welche beispielsweise als ein Deckel ausgebildet ist. Dabei ist die Komponente 76 separat von der Förderschnecke 26 separat von dem Gehäuse 18 ausgebildet und mit dem Gehäuse 18 verbunden beziehungsweise an diesem gehalten. Während des Verfahrens dreht sich somit die Förderschnecke 26 um die Drehachse 30 relativ zu der Komponente 76. Dabei ist eine Labyrinthdichtung 78 vorgesehen, mittels welcher die Komponente 76 gegen die Förderschnecke 26 abgedichtet ist. Die Labyrinthdichtung 78 ist beispielsweise in die Komponente 76 integriert. Dabei weist die Austrittsöffnung 28 einen dritten Querschnitt auf, welcher entlang der gesamten Erstreckung der Austrittsöffnung 28 konstant ist. Der Querschnitt ist von dem mit dem Matrixmaterial 14 versehenen Verstärkungsfaserelement 12 durchströmbar. Dabei entspricht vorzugsweise der dritte Querschnitt dem ersten Querschnitt.

Des Weiteren weist die Komponente 76 eine beispielsweise als Bohrung ausgebildete Aufnahme 80 auf, in welcher beispielsweise wenigstens eine Thermoelement anordenbar ist. Mittels des Thermoelements kann wenigstens eine Temperatur, insbesondere der Förderschnecke 26, erfasst werden.

Aus FIG 2 ist besonders gut erkennbar, dass der Matrixkanal 46 als ein Schneckengang der Förderschnecke 26 ausgebildet ist, wobei der auch als Flankenabstand bezeichnete Abstand A in Förderrichtung abnimmt. Auch die beispielsweise als Gangtiefe bezeichnete Breite B des Schneckengangs beziehungsweise des Matrixkanals 46 nimmt entlang der Förderrichtung dadurch ab, dass die Förderschnecke 26 konisch verläuft. Außerdem ist besonders gut aus FIG 2 die helixartige Anordnung der Verbindungskanäle 64 erkennbar. Dabei sind jeweilige Öffnungen 82 der Verbindungskanäle 64, die über die Öffnungen 82 in den Matrixkanal 46 münden und somit fluidisch mit dem Matrixkanal 46 verbunden sind, in dem Matrixkanal 46 und dabei entlang der gedachten Schraubenlinie angeordnet.

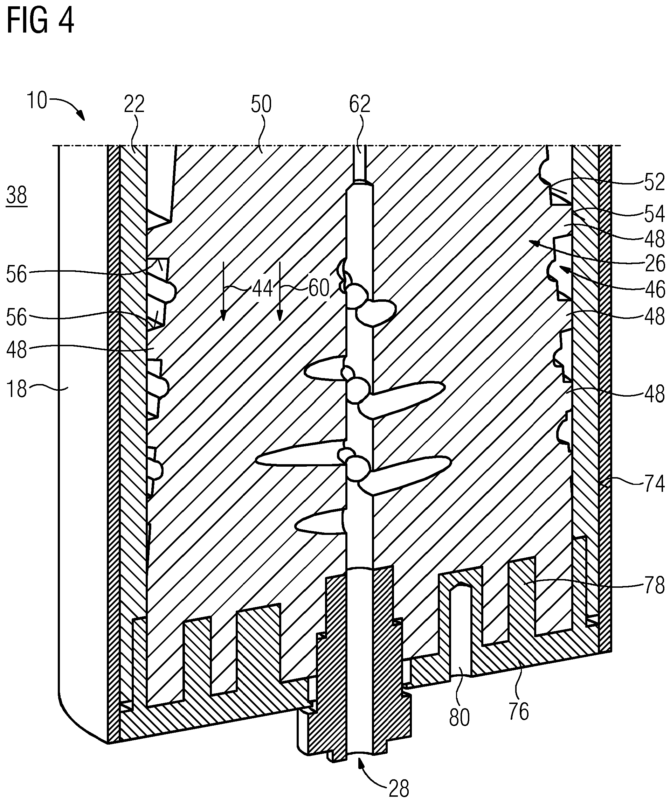

Aus FIG 3 ist besonders gut erkennbar, dass die Verbindungskanäle 64 an sich geradlinig ausgebildet und in Strömungsrichtung beziehungsweise in Fließrichtung angefast sind. Dies ist auch besonders gut aus FIG 4 erkennbar, welche die Vorrichtung 10 ausschnittsweise in einer geschnittenen Perspektivansicht zeigt.

### Bezugszeichenliste

- 10: Vorrichtung
- 12: Verstärkungsfaserelement
- 14: Matrixmaterial
- 16: Filament
- 18: Gehäuse
- 20: Deckel
- 22: Aufnahmeraum
- 24: Durchgangsöffnung
- 26: Förderschnecke
- 28: Austrittsöffnung
- 30: Drehachse
- 32: Lagerelement
- 34: Lagerelement
- 36: Durchgangsöffnung
- 38: Umgebung
- 40: Zahnrad
- 42: Sicherungsmutter
- 44: Pfeil
- 46: Matrixkanal
- 48: Steg
- 50: Schneckenkern
- 52: außenumfangsseitige Mantelfläche
- 54: innenumfangsseitige Mantelfläche
- 56: Flanke
- 58: Imprägnierungskanal
- 60: Pfeil
- 62: Faserkanal
- 64: Verbindungskanal
- 66: Einführtrichter
- 68: Beschichtung
- 70: Grundkörper
- 72: Heizeinrichtung
- 74: außenumfangsseitige Mantelfläche
- 76: Komponente
- 78: Labyrinthdichtung
- 80: Aufnahme
- A: Abstand
- B: Breite
- L: Längenbereich
- T1: Teilbereich
- T2: Teil
- T3: Teilbereich
- T4: Teil

## Patentansprüche

1. Vorrichtung (10) zum Versehen zumindest eines wenigstens ein Filament (16) aufweisenden Faserelements (12) mit einem Matrixmaterial (14), wobei die Vorrichtung (10) aufweist:
- ein Gehäuse (18), in welches das Matrixmaterial (14) einbringbar ist;
- eine zumindest teilweise in dem Gehäuse (18) angeordnete, zumindest in einem in dem Gehäuse (18) angeordneten Längenbereich (L) konisch verlaufende und um eine Drehachse (30) relativ zu dem Gehäuse (18) drehbare Förderschnecke (26), mittels welcher unter Drehen der Förderschnecke (26) das in das Gehäuse (18) eingebrachte Matrixmaterial (14) in eine Förderrichtung (44) zu fördern und mit einem Druck beaufschlagbar ist;
- wenigstens einen durch die Förderschnecke (26) und durch das Gehäuse (18) begrenzten Matrixkanal (46), in welchem das Matrixmaterial (14) mittels der Förderschnecke (26) zu Fördern und mit dem Druck beaufschlagbar ist;
- wenigstens einen innerhalb der Förderschnecke (26) verlaufenden Imprägnierungskanal (58), durch welchen das Faserelement (12) hindurchförderbar ist; und
- wenigstens einen innerhalb der Förderschnecke (26) verlaufenden Verbindungskanal (64), über welchen das Matrixmaterial (14) aus dem Matrixkanal (46) in den Imprägnierungskanal (58) zu führen ist, wodurch das Faserelement (12) in dem Imprägnierungskanal (58) mit dem Matrixmaterial (14) zu versehen ist.

2. Vorrichtung (10) nach Anspruch 1,
wobei durch den konischen Verlauf des Längenbereiches (L) eine in radialer Richtung der Förderschnecke (26) verlaufende Breite (B) des Matrixkanals (46) entlang der Förderrichtung (44) abnimmt.

3. Vorrichtung (10) nach Anspruch 1 oder 2,
wobei ein Abstand (A) zwischen zwei einander zugewandten Stegflanken (56) der Förderschnecke (26) entlang der Förderrichtung (44) abnimmt.

4. Vorrichtung (10) nach einem der vorhergehenden Ansprüche, wobei die Vorrichtung (10) mehrere weitere, innerhalb der Förderschnecke (26) verlaufende Verbindungskanäle (64) aufweist, über welchen das Matrixmaterial (14) aus dem Matrixkanal (46) in den Imprägnierungskanal (58) zu führen ist, wodurch das Faserelement (12) in dem Imprägnierungskanal (58) mit dem Matrixmaterial (14) zu versehen ist.

5. Vorrichtung (10) nach Anspruch 4,
wobei die Verbindungskanäle (64) helixartig angeordnet sind.

6. Vorrichtung (10) nach einem der vorhergehenden Ansprüche, wobei der Verbindungskanal (64) in Strömungsrichtung des den Verbindungskanal (64) durchströmenden Matrixmaterials (14) angefast ist.

7. Vorrichtung (10) nach einem der vorhergehenden Ansprüche, wobei innerhalb der Förderschnecke (26) ein mit dem Imprägnierungskanal (58) verbundener und sich in Richtung des Imprägnierungskanals (58) verjüngender Einführtrichter (66) angeordnet ist, in welchen das Faserelement (12) einführbar ist, wobei der Imprägnierungskanal (58) über den Einführtrichter (66) mit dem Faserelement (12) versorgbar ist.

8. Vorrichtung (10) nach Anspruch 7,
wobei der Einführtrichter (66) eine reibungsmindernde Beschichtung (68) aufweist.

9. Vorrichtung (10) nach einem der vorhergehenden Ansprüche, wobei zumindest einem Teilbereich (T1) des Matrixkanals (46) eine Heizeinrichtung (72) zugeordnet ist, mittels welchem der zumindest eine Teilbereich (T1) beheizbar ist.

10. Vorrichtung (10) nach Anspruch 9,
wobei dem zumindest einen Teilbereich (T1) wenigstens ein weiterer Teilbereich (T3) des Matrixkanals (46) entlang der Förderrichtung (44) vorweggeht, wobei der weitere Teilbereich (T3) unbeheizt ist.

11. Vorrichtung (10) nach Anspruch 9 oder 10,
wobei die Heizeinrichtung (72) an dem Gehäuse (18) gehalten ist, sodass der zumindest eine Teilbereich (T1) in radialer Richtung der Förderschnecke (26) nach außen durch die Heizeinrichtung (72) überdeckt ist.

12. Verfahren zum Versehen zumindest eines wenigstens ein Filament (16) aufweisenden Faserelements (12) mit einem Matrixmaterial (14), mit den Schritten:
- Einbringen des Matrixmaterials (14) in ein Gehäuse (18), in welchem eine Förderschnecke (26) zumindest teilweise angeordnet ist, die zumindest in einem in dem Gehäuse (18) angeordneten Längenbereich (L) konisch verläuft und um eine Drehachse (30) relativ zu dem Gehäuse (18) drehbar ist;
- Drehen der Förderschnecke (26) um die Drehachse (30) relativ zu dem Gehäuse (18), wodurch das in das Gehäuse (18) eingebrachte Matrixmaterial (14) in eine Förderrichtung (44) durch wenigstens einen durch die Förderschnecke (26) und durch das Gehäuse (18) begrenzten Matrixkanal (46) hindurch gefördert und in dem Matrixkanal (46) mit einem Druck beaufschlagt wird;
- Fördern des Faserelements (12) durch wenigstens einen innerhalb der Förderschnecke (26) verlaufenden Imprägnierungskanal (58), wobei das Matrixmaterial (14) über wenigstens einen innerhalb der Förderschnecke (26) verlaufenden Verbindungskanal (46) aus dem Matrixkanal (46) in den Imprägnierungskanal (58) geführt wird, wodurch das Faserelement (12) in dem Imprägnierungskanal (58) mit dem Matrixmaterial (14) versehen wird.

13. Verfahren nach Anspruch 12,
wobei das mit dem Matrixmaterial (14) versehene Faserelement (12) aus dem Imprägnierungskanal (58) herausgeführt und, insbesondere in einem Wasserbad, abgekühlt wird.

14. Verfahren nach Anspruch 13,
wobei das mit dem Matrixmaterial (14) versehene Faserelement (12) nach dem Herausführen, insbesondere nach dem Abschrecken, aufgewickelt wird.

15. Verfahren nach Anspruch 12,
wobei das mit dem Matrixmaterial (14) versehene Faserelement (12) aus dem Imprägnierungskanal (58) herausgeführt und, insbesondere unmittelbar danach, auf ein Substrat derart aufgebracht wird, dass jeweilige Schichten aus dem mit dem Matrixmaterial (14) versehenen Faserelement (12) aufeinander angeordnet werden, um dadurch wenigstens ein Bauelement additiv herzustellen.

## Claims

1. Apparatus (10) for providing at least one fibre element (12), comprising at least one filament (16), with a matrix material (14), wherein the apparatus (10) has:
- a barrel (18) into which the matrix material (14) can be introduced;
- a conveying screw (26) which is at least partially arranged in the barrel (18), which runs conically at least in a length region (L) arranged in the barrel (18), which is rotatable about an axis of rotation (30) relative to the barrel (18), and by means of which, with rotation of the conveying screw (26), the matrix material (14) introduced into the barrel (18) can be conveyed in a conveying direction (44) and be subjected to a pressure;
- at least one matrix channel (46) which is delimited by the conveying screw (26) and by the barrel (18) and in which the matrix material (14) can be conveyed and subjected to the pressure by means of the conveying screw (26);
- at least one impregnation channel (58) which runs within the conveying screw (26) and through which the fibre element (12) can be conveyed; and
- at least one connecting channel (64) which runs within the conveying screw (26) and via which the matrix material (14) can be guided from the matrix channel (46) into the impregnation channel (58), as a result of which the fibre element (12) in the impregnation channel (58) can be provided with the matrix material (14).

2. Apparatus (10) according to Claim 1,
wherein the conical profile of the length region (L) has the effect that a width (B) of the matrix channel (46), said width running in a radial direction of the conveying screw (26), decreases along the conveying direction (44).

3. Apparatus (10) according to Claim 1 or 2,
wherein a distance (A) between two mutually facing flight flanks (56) of the conveying screw (26) decreases along the conveying direction (44).

4. Apparatus (10) according to one of the preceding claims, wherein the apparatus (10) comprises a plurality of further connecting channels (64) which run within the conveying screw (26) and via which the matrix material (14) can be guided from the matrix channel (46) into the impregnation channel (58), as a result of which the fibre element (12) in the impregnation channel (58) can be provided with the matrix material (14).

5. Apparatus (10) according to Claim 4,
wherein the connecting channels (64) are arranged in a helical manner.

6. Apparatus (10) according to one of the preceding claims, wherein the connecting channel (64) is bevelled in the flow direction of the matrix material (14) flowing through the connecting channel (64).

7. Apparatus (10) according to one of the preceding claims, wherein an inlet hopper (66) which is connected to the impregnation channel (58) and which tapers in the direction of the impregnation channel (58) and into which the fibre element (12) can be introduced is arranged within the conveying screw (26), wherein the fibre element (12) can be fed to the impregnation channel (58) via the inlet hopper (66).

8. Apparatus (10) according to Claim 7,
wherein the inlet hopper (66) has a friction-reducing coating (68) .

9. Apparatus (10) according to one of the preceding claims, wherein at least one subregion (T1) of the matrix channel (46) is assigned a heating device (72), by means of which the at least one subregion (T1) can be heated.

10. Apparatus (10) according to Claim 9,
wherein the at least one subregion (T1) is preceded along the conveying direction (44) by at least one further subregion (T3) of the matrix channel (46), wherein the further subregion (T3) is unheated.

11. Apparatus (10) according to Claim 9 or 10,
wherein the heating device (72) is retained on the barrel (18), with the result that the at least one subregion (T1) is outwardly covered by the heating device (72) in the radial direction of the conveying screw (26).

12. Method for providing at least one fibre element (12), comprising at least one filament (16), with a matrix material (14), having the following steps:
- introducing the matrix material (14) into a barrel (18) in which a conveying screw (26) is at least partially arranged, said conveying screw running conically at least in a length region (L) arranged in the barrel (18) and being rotatable about an axis of rotation (30) relative to the barrel (18);
- rotating the conveying screw (26) about the axis of rotation (30) relative to the barrel (18), as a result of which the matrix material (14) introduced into the barrel (18) is conveyed in a conveying direction (44) through at least one matrix channel (46), which is delimited by the conveying screw (26) and by the barrel (18), and is subjected to a pressure in the matrix channel (46);
- conveying the fibre element (12) through at least one impregnation channel (58) which runs within the conveying screw (26), wherein the matrix material (14) is guided from the matrix channel (46) into the impregnation channel (58) via at least one connecting channel (46) which runs within the conveying screw (26), as a result of which the fibre element (12) in the impregnation channel (58) is provided with the matrix material (14).

13. Method according to Claim 12,
wherein the fibre element (12) provided with the matrix material (14) is guided out of the impregnation channel (58) and cooled, in particular in a water bath.

14. Method according to Claim 13,
wherein, after the guiding-out operation, in particular after the quenching, the fibre element (12) provided with the matrix material (14) is wound up.

15. Method according to Claim 12,
wherein the fibre element (12) provided with the matrix material (14) is guided out of the impregnation channel (58) and, in particular immediately thereafter, applied to a substrate in such a way that respective layers of the fibre element (12) provided with the matrix material (14) are arranged on top of one another, in order to additively produce at least one structural element as a result.

## Revendications

1. Dispositif (10) permettant de fournir au moins un élément fibreux (12), présentant au moins un filament (16), avec un matériau de matrice (14), dans lequel le dispositif (10) présente :
- un boîtier (18) dans lequel le matériau de matrice (14) peut être introduit ;
- un transporteur à vis (26) agencé au moins partiellement dans le boîtier (18), s'étendant de manière conique au moins dans une région longitudinale (L) agencée dans le boîtier (18), et pouvant tourner par rapport au boîtier (18) autour d'un axe de rotation (30), et au moyen duquel le matériau de matrice (14) introduit dans le boîtier (18) peut, par rotation du transporteur à vis (26), être transporté dans une direction de transport (44) et être soumis à une pression ;
- au moins un canal de matrice (46) délimité par le transporteur à vis (26) et par le boîtier (18) et au sein duquel le matériau de matrice (14) peut être transporté et être soumis à la pression au moyen du transporteur à vis (26) ;
- au moins un canal d'imprégnation (58) s'étendant à l'intérieur du transporteur à vis (26) et à travers lequel l'élément fibreux (12) peut être transporté ; et
- au moins un canal de liaison (64) s'étendant à l'intérieur du transporteur à vis (26) et par l'intermédiaire duquel le matériau de matrice (14) peut être guidé hors du canal de matrice (46) jusque dans le canal d'imprégnation (58), ce qui fait que l'élément fibreux (12) peut être muni du matériau de matrice (14) dans le canal d'imprégnation (58).

2. Dispositif (10) selon la revendication 1,
dans lequel une largeur (B) du canal de matrice (46) s'étendant dans la direction radiale du transporteur à vis (26) diminue le long de la direction de transport (44) du fait du tracé conique de la région longitudinale (L).

3. Dispositif (10) selon la revendication 1 ou 2,
dans lequel une distance (A) entre deux flancs de filet (56) tournés l'un vers l'autre du transporteur à vis (26) diminue le long de la direction de transport (44).

4. Dispositif (10) selon l'une quelconque des revendications précédentes,
dans lequel le dispositif (10) présente plusieurs autres canaux de liaison (64) s'étendant à l'intérieur du transporteur à vis (26) et par l'intermédiaire desquels le matériau de matrice (14) peut être guidé hors du canal de matrice (46) jusque dans le canal d'imprégnation (58), ce qui fait que l'élément fibreux (12) peut être muni du matériau de matrice (14) dans le canal d'imprégnation (58).

5. Dispositif (10) selon la revendication 4,
dans lequel les canaux de liaison (64) sont agencés de manière hélicoïdale.

6. Dispositif (10) selon l'une quelconque des revendications précédentes,
dans lequel le canal de liaison (64) est chanfreiné dans la direction d'écoulement du matériau de matrice (14) parcourant le canal de liaison (64).

7. Dispositif (10) selon l'une quelconque des revendications précédentes,
dans lequel un entonnoir d'introduction (66) relié au canal d'imprégnation (58) et se rétrécissant en direction du canal d'imprégnation (58) et au sein duquel l'élément fibreux (12) peut être introduit est agencé à l'intérieur du transporteur à vis (26), dans lequel le canal d'imprégnation (58) peut être alimenté en élément fibreux (12) par l'intermédiaire de l'entonnoir d'introduction (66).

8. Dispositif (10) selon la revendication 7,
dans lequel l'entonnoir d'introduction (66) présente un revêtement réduisant le frottement (68).

9. Dispositif (10) selon l'une quelconque des revendications précédentes,
dans lequel au moins une sous-région (T1) du canal de matrice (46) est associée à un dispositif de chauffage (72) au moyen duquel la au moins une sous-région (T1) peut être chauffée.

10. Dispositif (10) selon la revendication 9,
dans lequel au moins une autre sous-région (T3) du canal de matrice (46) précède la au moins une sous-région (T1) le long de la direction de transport (44), dans lequel l'autre sous-région (T3) n'est pas chauffée.

11. Dispositif (10) selon la revendication 9 ou 10,
dans lequel le dispositif de chauffage (72) est maintenu sur le boîtier (18) de sorte que la au moins une sous-région (T1) est recouverte par le dispositif de chauffage (72) vers l'extérieur dans la direction radiale du transporteur à vis (26).

12. Procédé permettant de fournir au moins un élément fibreux (12), présentant au moins un filament (16), avec un matériau de matrice (14), comprenant les étapes consistant à :
- introduire le matériau de matrice (14) dans un boîtier (18) au sein duquel est agencé au moins partiellement un transporteur à vis (26) s'étendant de manière conique au moins dans une région longitudinale (L) agencée dans le boîtier (18), et pouvant tourner autour d'un axe de rotation (30) par rapport au boîtier (18) ;
- faire tourner le transporteur à vis (26) autour de l'axe de rotation (30) par rapport au boîtier (18), ce qui fait que le matériau de matrice (14) introduit dans le boîtier (18) est transporté dans une direction de transport (44) à travers au moins un canal de matrice (46) délimité par le transporteur à vis (26) et par le boîtier (18) et est soumis à une pression dans le canal de matrice (46) ;
- transporter l'élément fibreux (12) à travers au moins un canal d'imprégnation (58) s'étendant à l'intérieur du transporteur à vis (26), dans lequel le matériau de matrice (14) est guidé hors du canal de matrice (46) jusque dans le canal d'imprégnation (58) par l'intermédiaire d'au moins un canal de liaison (46) s'étendant à l'intérieur du transporteur à vis (26), ce qui fait que l'élément fibreux (12) est muni du matériau de matrice (14) dans le canal d'imprégnation (58).

13. Procédé selon la revendication 12,
dans lequel l'élément fibreux (12) muni du matériau de matrice (14) est sorti du canal d'imprégnation (58) et est refroidi, en particulier dans un bain d'eau.

14. Procédé selon la revendication 13,
dans lequel l'élément fibreux (12) muni du matériau de matrice (14) est enroulé après avoir été sorti, en particulier après une trempe.

15. Procédé selon la revendication 12,
dans lequel l'élément fibreux (12) muni du matériau de matrice (14) est sorti du canal d'imprégnation (58) et est appliqué, en particulier immédiatement après, sur un substrat de telle manière que des couches respectives de l'élément fibreux (12) muni du matériau de matrice (14) sont agencées les unes sur les autres afin de produire de manière additive au moins un élément.
